# EUROPEAN PATENT APPLICATION

(11) **EP 1 677 246 A1**
(43) Date of publication of application: **05.07.2006**
(21) Application number: 05258086.7
(22) Date of filing: 28.12.2005
(51) Int. Cl.: G06Q 30/00, G07F 17/42

(54) **System, server and device for providing ticket**

(30) Priority: 28.12.2004 JP 2004381920
(71) Applicant: Brother Kogyo Kabushiki Kaisha, Nagoya-shi, Aichi-ken 467-8561 (JP)
(72) Inventor: Ohara, Kiyotaka c/o Technology Planning & IP Dept., Mizuho-ku, Nagoya-shi,Aichi-ken 467-8562 (JP)
(74) Representative: Smith, Samuel Leonard

(57) **Abstract**

A system provides tickets from a server to a client device connected to the server via a network. The client device includes a ticket generating unit that receives ticket data from the server and generates a ticket by recording information represented by the ticket data on the ticket, a reading unit that reads the information recorded on the ticket, and a client side transmission unit that transmits data representing the information recorded on the ticket to the server. The server includes a ticket transmission unit that transmits the ticket data to the client device, a judging unit that judges whether the ticket is properly generated in accordance with the data transmitted from the client side transmission unit, and a re-transmission control unit that operates to transmit the ticket data again to the client device if the judging unit judges that the ticket is not properly generated.

## Description

### Background of the Invention

Aspects of the present invention relates to a ticket providing system for providing tickets for a user of a client device.

A commercial system configured to transmit image data from a server to a client device via the Internet so that a medium on which an image corresponding to the image data is printed for a user of the client device has been widely used. In such a system the user of the client device operates the client device to obtain the image data from the server and to print the image corresponding to the image data on the medium.

Japanese Patent Provisional Publication No. 2004-78593 (hereafter, referred to as JP 2004-78593A) discloses an example of such a system. In the system disclosed in JP 2004-78593A, the printer operates to obtain an image data file from a server if payment of fees made by a user of a printer is accepted, and to start printing an image corresponding to the obtained image data if payment of an amount of money more than a predetermined fee is accepted.

The above mentioned system is able to provide a recording medium, on which an image is printed, by requesting the user to pay an appropriate fee. However, the system is not able to address a situation where an image can not be properly printed on a recording medium due to, for example, a mechanical problem of the printer. In this case, if the recording medium is a concert ticket, the user can not obtain the concert ticket in spite of the fact that the user has paid an appropriate fee for the concert ticket.

### Summary of the Invention

Aspects of the present invention are advantageous in that a ticket providing system configured to reliably provide a ticket for a user is provided.

According to an aspect of the invention, there is provided a system for providing tickets from a server to a client device connected to the server via a network. The client device includes a ticket generating unit configured to receive ticket data from the server and generate a ticket by recording information represented by the ticket data on the ticket, a reading unit configured to read the information recorded on the ticket, and a client side transmission unit configured to transmit data representing the information recorded on the ticket read by the reading unit, to the server. The server includes a ticket transmission unit configured to transmit the ticket data to the client device, a judging unit configured to judge whether the ticket is properly generated in accordance with the data transmitted from the client side transmission unit after the ticket transmission unit transmits the ticket data, and a re-transmission control unit configured to re-transmit the ticket data to the client device if the judging unit judges that the ticket is not properly generated. In some aspects, the client device further includes a re-generation control unit configured to control the ticket generating unit, the reading unit and the client side transmission unit so that if the ticket data is re-transmitted from the server by the re-transmission control unit after the client side transmission unit transmits the data to the server, the ticket generating unit re-generating a ticket in accordance with the ticket data re-transmitted from the server by recording information represented by the re-transmitted ticket data on the re-generated ticket, the reading unit reading the information recorded on the re-generated ticket, and the client side transmission unit transmitting data representing the information recorded on the re-generated ticket to the server.

Since processes for generating a ticket are repeated, it becomes possible to reliably provide a ticket to a user of the client device.

Optionally, the ticket data may include identification data for identifying the ticket data. In some aspects, the judging unit may judge that the ticket is properly generated if the data transmitted from the client side transmission unit is equivalent to the ticket data transmitted previously to the client device by the ticket transmission unit and is identified by the identification data of the data transmitted from the client side transmission unit.

With this configuration, it is possible to easily judge whether the ticket is generated properly in the server.

Still optionally, the re-transmission control unit may be configured to transmit generation command data for instructing the client device to generate the ticket if the judging unit judges that the ticket is not generated properly, to wait until request data for requesting the ticket data is transmitted from the client device after transmitting the generation command data, and to re-transmit the ticket data to the client device after receiving the request data from the client device.

Since the server does not re-transmit the ticket data until the server receives the request data, it is possible to suspend the generation of the ticket on the client device until the server receives the request data.

Still optionally, the server may include a database recording unit that records the ticket data judged to be properly generated as valid ticket data in the database. In this aspect, the re-transmission control unit of the server may be configured to transmit the ticket data to the client device, the ticket data being different from the ticket data previously transmitted by the ticket transmission unit. The re-generation unit of the client device may operate so that generation of a ticket in accordance with the ticket data re-transmitted from the server, reading of the information recorded on the re-generated ticket, and transmission of the data representing the information of the re-generated ticket to the server are performed in accordance with the ticket data being different from the ticket data previously transmitted by the ticket transmission unit.

With this configuration, it is possible to prevent dishonest use of a ticket judged not to be generated properly from occurring even if the printed image on the ticket is visibly recognizable.

Still optionally, the system may include a ticket inspecting device connected to the server. The ticket inspecting device may include an inspecting device side reading unit configured to read information recorded on the ticket, an inspecting device side transmission unit configured to transmit data representing the information of the ticket read by the inspecting device side reading unit, to the server, and an inspection result notifying unit configured to receive inspection data from the server and to provide notification of an inspection result represented by the inspection data. In at least some aspects, the server may include an inspection unit configured to judge whether the ticket is properly generated in accordance with the data transmitted from the inspecting device side transmission unit, the ticket being properly generated if the ticket data corresponding to the data transmitted from the ticket inspecting device corresponds to the ticket data registered in the database, and an inspection result transmission unit configured to transmit the inspection data to the ticket inspecting device, the inspection data being a result of the judgment made by the inspection unit.

With this configuration, the inspection of the ticket can be performed appropriately.

Still optionally, the server may include an accounting unit configured to conduct an accounting process for generation of the ticket when the judging unit judges that the ticket is generated properly.

With this configuration, it is possible to bill the user only when the ticket is judged to be properly generated.

According to another aspect of the invention, there is provided a client device connected to a server via a network. The client device includes a ticket generating unit configured to receive ticket data from the server and generate a ticket by recording information represented by the ticket data on the ticket, a reading unit configured to read the information recorded on the ticket, a client side transmission unit configured to transmit data representing the information recorded on the ticket read by the reading unit, to the server, and a re-generation control unit configured to control the ticket generating unit, the reading unit and the client side transmission unit so that if the ticket data is re-transmitted from the server after the client side transmission unit transmits the data to the server, the ticket generation unit re-generating a ticket in accordance with the ticket data re-transmitted from the server, the reading unit reading the information recorded on the re-generated ticket, and the client side transmission unit transmitting data representing the information recorded on the re-generated ticket to the server.

Since processes for generating a ticket are repeated, it becomes possible to reliably provide a ticket to a user of the client device.

According to another aspect of the invention, there is provided a server connected to a client device via a network. The server includes a ticket transmission unit configured to transmit ticket data for generating a ticket to the client device, and a judging unit configured to judge whether the ticket is properly generated in accordance with data transmitted from the client device after the ticket transmission unit transmits the ticket data. The data represents information on the ticket read by the client device. The server further includes a re-transmission control unit configured to re-transmit the ticket data to the client device if the judging unit judges that the ticket is not properly generated.

Since processes for generating a ticket are repeated, it becomes possible to reliably provide a ticket to a user of the client device.

According to another aspect of the invention, there is provided an inspecting device connected to a server via a network. The inspecting device includes an inspecting device side reading unit configured to read information recorded on a ticket, an inspecting device side transmission unit configured to transmit data representing the information on the ticket read by the inspecting device side reading unit, to the server, and an inspection result notifying unit configured to receive inspection data from the server and to provide notification of an inspection result represented by the inspection data.

With this configuration, the inspection of the ticket can be performed appropriately.

According to another aspect of the invention, there is provided a method of generating a ticket on a client device connected to a server via a network. The method includes the steps of generating a ticket by recording information represented by ticket data on the ticket, in accordance with the ticket data transmitted from the server, reading the information recorded on the ticket, transmitting data representing the information recorded on the ticket to the server, and repeating the generating step, the reading step and the transmitting step if the ticket data is re-transmitted from the server after the transmitting step transmits the data to the server.

Since processes for generating a ticket are repeated, it becomes possible to reliably provide a ticket to a user of the client device.

According to another aspect of the invention, there is provided a method to be implemented on a server for enabling a client device connected to the server via a network to generate a ticket. The method includes the steps of transmitting ticket data for generating a ticket to the client device, judging whether the ticket is properly generated in accordance with data transmitted from the client device after the step of transmitting transmits the ticket data to the client device, and re-transmitting the ticket data to the client device if the step of judging judges that the ticket is not properly generated.

Since processes for generating a ticket are repeated, it becomes possible to reliably provide a ticket to a user of the client device.

According to another aspect of the invention, there is provided a method for inspecting a ticket on a device connected to a server via a network. The method includes reading information recorded on a ticket, transmitting data representing the information recorded on the ticket to the server, and providing notification of an inspection result represented by inspection data when the inspection data is transmitted from the server after step of transmitting the data to the server.

With this configuration, the inspection of the ticket can be performed appropriately.

### Brief Description of the Accompanying Drawings

Fig. 1 is shows a block diagram of a service providing system according to illustrative aspects of the invention.
Fig. 2 shows a configuration of an operation unit of a MFP provided in the service providing system according to illustrative aspects of the invention.
Fig. 3 is a flowchart illustrating a MFP process to be executed by the MFP according to illustrative aspects of the invention.
Figs. 4A to 4D show examples of a selection screen displayed on the MFP according to illustrative aspects of the invention.
Fig. 5 is a flowchart illustrating a session process to be executed by the MFP according to illustrative aspects of the invention.
Fig. 6 is a flowchart illustrating a ticket issue job to be executed by the MFP according to illustrative aspects of the invention.
Figs. 7A to 7D show examples of parameter input screens displayed on the MFP according to illustrative aspects of the invention.
Fig. 8 shows an example of a ticket according to illustrative aspects of the invention.
Fig. 9 is a flowchart illustrating a function server process according to illustrative aspects of the invention.
Fig. 10 is a flowchart illustrating a session process to be executed by a function server provided in the service providing system according to illustrative aspects of the invention.
Fig. 11 is a flowchart illustrating a ticket providing job to be executed by the function server according to illustrative aspects of the invention.
Fig. 12 shows an example of a data structure of session management information according to illustrative aspects of the invention.
Fig. 13 shows an example of a data structure of ticket management information according to illustrative aspects of the invention.
Fig. 14 is a flowchart illustrating an accounting information update process to be executed by the function server according to illustrative aspects of the invention.
Fig. 15 shows an example of a data structure of accounting information according to illustrative aspects of the invention.
Fig. 16 is a flowchart illustrating the ticket confirmation job to be executed by the function server according to illustrative aspects of the invention.
Fig. 17 is a flowchart illustrating a ticket confirmation process to be executed by a ticket inspecting device provided in the ticket providing system according to illustrative aspects of the invention.
Figs. 18A to 18D show examples of parameter input screens to be displayed on the ticket inspecting device according to illustrative aspects of the invention.
Fig. 19 is a flowchart of a variation of the ticket providing job according to illustrative aspects of the invention.

### Detailed Description of the Embodiments

Hereafter, an illustrative embodiment according to aspects of the invention will be described with reference to the accompanying drawings.

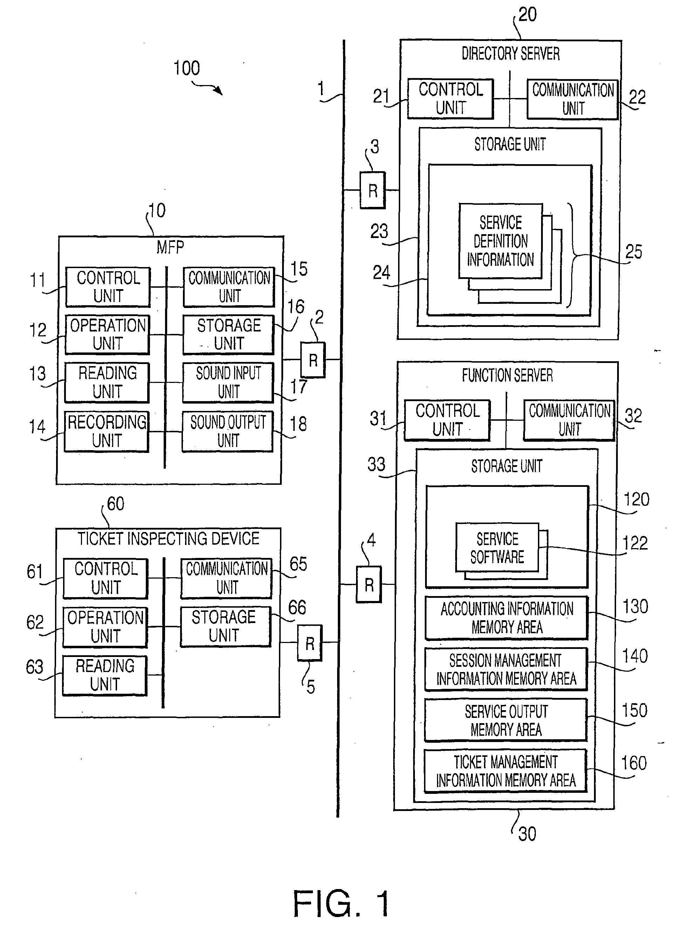

Fig. 1 is a block diagram of a service providing system 100 according to an illustrative embodiment of the invention. As shown in Fig. 1, the service providing system 100 includes an MFP (multifunction peripheral) 10, a directory server 20, a function server 30, and a ticket inspecting device 60, which are connected to each other via a network 1. In this illustrative embodiment, the network 1 is a WAN (wide area network). The MFP 10, directory server 20, function server 30 and ticket inspecting device 60 are connected to the network 1 via respective routers (broadband routers) R.

The multifunction device 10 includes a control unit 11, an operation unit 12, a reading unit 13, a recording unit 14, a communication unit 15, a storage unit 16, a sound input unit 17 and a sound output unit 18. The control unit 11 includes a CPU, a ROM and a RAM (not shown in Fig. 1), and the CPU executes programs stored in the ROM so as to control operations of the MFP 10.

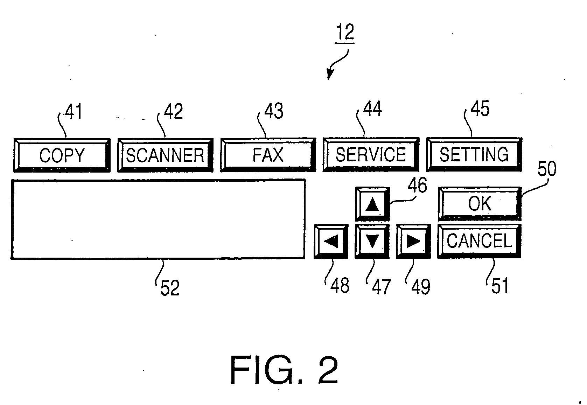

As shown in Fig. 2, the operation unit 12 functioning as a user interface of the MFP 10 includes a copy key 41, a scanner key 42, a FAX key 43, a service key 44, a setting key 45, cursor keys 46 (up, down, left and right keys), an OK key 50, and a cancel key 51. The operation unit 12 further includes a display 52.

The reading unit 13 functioning as a scanner reads an image formed on (printed on) an original and generates image data corresponding to the read image. The recording unit 14 functioning as a printer forms an image on a sheet in accordance with print data. The communication unit 15 conducts data processing for the data communication with a node (e.g., the directory server 20 or the function server 30) on the network 1.

The storage unit 16 includes a non-volatile RAM in which various types of data are stored. The sound input unit 17 includes a microphone installed in a handset (not shown) of the MFP 10. The sound input unit 17 generates sound data (e.g. PCM data) representing the sound obtained by the microphone. The sound output unit 18 outputs sound via a speaker installed in the handset or a speaker installed in a main body of the MFP 10.

The directory server 20 includes a control unit 21, a communication unit 22 and a storage unit 23. The control unit 21 includes a CPU, a ROM and a RAM (not shown in Fig. 1), and the CPU executes programs stored in the ROM so as to control operations of the directory server 20. The communication unit 22 conducts data processing for the data communication with a node (e.g., the function server 30) on the network 1. The storage unit 23 includes a hard disk drive (not shown in Fig. 1) in which various types of data are stored. In the storage unit 23, a service definition information memory area 24 for storing service definition information 25 is provided.

The service definition information 25 is XML data described by an XML (eXtensible Markup Language). It is possible to display a service list including services that the function server 30 supports on a service selection screen which can be generated by use of the service definition information 25. For example, the service list includes service types and destination addresses (URL; Uniform Resource Locator) of services.

The function server 30 includes a control unit 31, a communication unit 32, and a storage unit 33. The control unit 31 includes a CPU, a ROM and a RAM (not shown in Fig. 1), and the CPU executes programs stored in the ROM so as to control operations of the function server 30. It should be noted that the control unit 31 of the function server 30 has considerably higher performance than that of the control unit 11 of the MFP 10, and therefore is able to execute processes that the MFP 10 is not able to execute.

The communication unit 32 conducts data processing for the data communication with a node (e.g., the MFP 10) on the network 1. The storage unit 33 includes a hard disk drive (not shown in Fig. 1) in which various types of data are stored. The storage unit 33 includes a service software memory area 120 for storing service software 122, an accounting information memory area 130 for storing information used for accounting management, a session management information memory area 140 for storing session management information (e.g., a session ID), a service output memory area 150 for storing print data, and a ticket management information memory area 160 for storing ticket management information (e.g., a ticket number).

The ticket inspecting device 60 includes a control unit 61, an operation unit 62, a reading unit 63, a communication unit 65, and a storage unit 66. Configuration of the control unit 61, the operation unit 62, the communication unit 65 and the storage unit 66 may be equivalent to the control unit 11, the operation unit 12, the reading unit 63, the communication unit 15 and the storage unit 16, respectively.

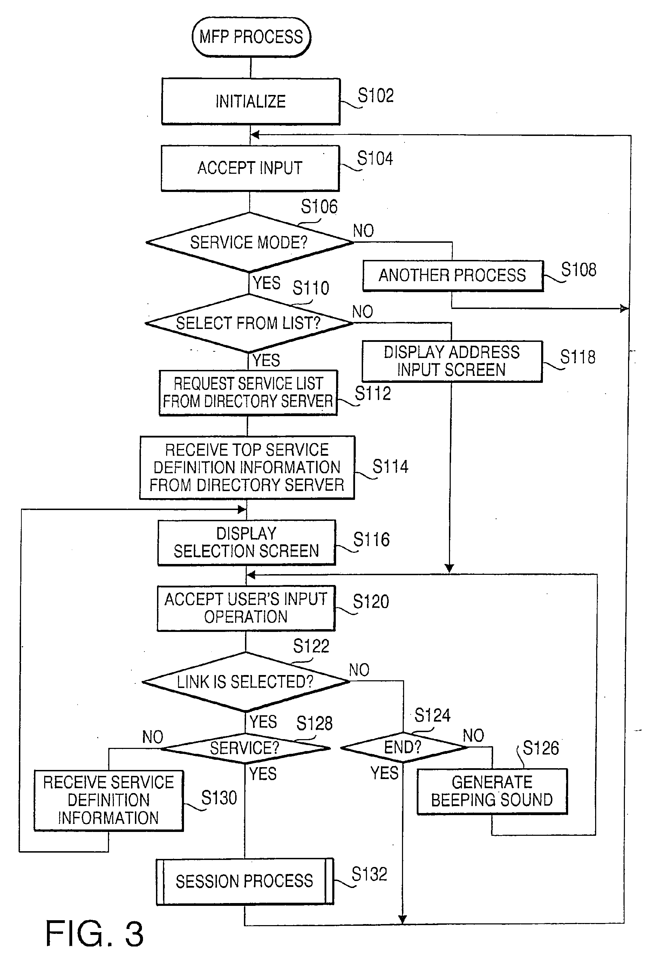

Hereafter, operation of the MFP 10 will be explained. Fig. 3 is a flowchart illustrating an MFP process which is executed under control of the control unit 11 of the MFP 10. The MFP process is initiated immediately when power of the MFP 10 is turned to ON.

First, in step S102, the control unit 11 executes an initializing process. Then, in step S104, the control unit 11 accepts an input. The input may be a command for instructing the MFP 10 to execute a certain process. For example, the input is a key input by a user through the operation unit 12 or a command signal transmitted from an external computer via the network 1.

In step S106, the control unit 11 judges whether the command instructs the MFP 10 to change to a service mode. If the command does not instruct the MFP 10 to change to the service mode (S106: NO), control proceeds to step S108 where a process for another mode corresponding to the input accepted in step S104 is executed. For example, a print out process for printing out data transmitted from the external computer may be executed in step S108. Then, control returns to step S104.

If the command instructs the MFP 10 to change to the service mode (S106: YES), control proceeds to step S110. In step S 110, the control unit 11 displays a selection screen, requesting a user to decide whether to select a desirable service (to be requested for the function server 30) from a list or designates directly a URL of a destination of a desirable service, on the display 52. Then, the control unit 11 waits for a user input. If the user input is accepted, the control unit 11 judges whether a service to be requested for the function server 30 is to be selected from a service list (S110).

If it is judged in step S 110 that a service to be requested for the function server 30 is to be selected from a service list (S 110: YES), control proceeds to step S 112 where the control unit 11 sends a request for a service list to the directory server 20. Specifically, in step S 110, the control unit 11 requests the service list by sending an HTTP request based on HTTP (HyperText Transfer Protocol) 1.1 (hereafter, simply referred to as an HTTP request) to a destination address in the storage unit 16. After receiving the HTTP request from the MFP 10, the directory server 20 sends top service definition information 25 back to the MFP 10 as an HTTP response based on HTTP 1.1. The top service definition information 25 is used by the MFP 10 to display a category selection screen allowing a user to select one of multiple service categories including "ticket issue service", "data storage service", "print service", "copy application service".

After the MFP 10 receives the top service definition information in step S114, the control unit 11 generates a selection screen based on the received service definition information 25 and displays the selection screen on the display 52 (S 116). Then, control proceeds to step S120.

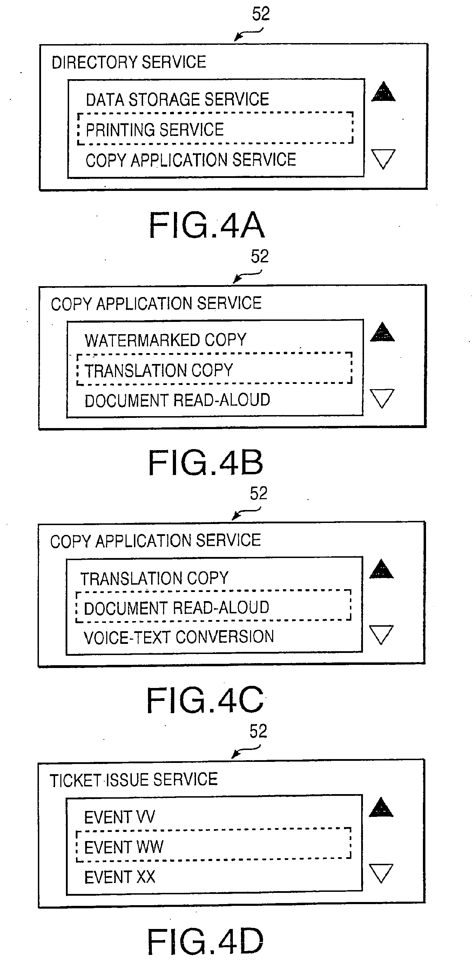

When step S116 is executed after the top service definition information 25 is received by the MFP 10, a category selection screen shown in Fig. 4A is displayed on the display 52 of the MFP 10. Specifically, a character string "Directory Service" as a display title is displayed at the top of the screen, and character strings "Data Storage Service", "Printing Service", "Copy Application Service" and "Ticket Issue Service" as items indicating selectable categories are displayed under the display title. Each item on the service selection screen has been associated with an ID of service definition information 25 corresponding to each category. By this configuration, when a selection of an item is confirmed by the user, service definition information 25 having the ID associated with the selected item is obtained from the directory server 20.

The MFP 10 displays upward/downward arrows (triangles) on the right side on the display 52 to allow the user to scroll up or down through the displayed items if all of the items can not be displayed on the display 52 simultaneously due to the size limitation of the display area. In Fig. 4A, the item "Ticket Issue Service" is not displayed due to the size limitation of the display area.

If step S 166 is executed after the service definition information 25 different from top service definition information 25 is received (e.g., service definition information 25 regarding "Copy Application Service"), a service selection screen shown in Fig. 4B or 4C is displayed on the display 52. Specifically, a character string "Copy Application Service" as a display title is displayed at the top of the screen, and character strings "Watermarked Copy", "Translation Copy", "Document Read-aloud" and "Voice-text Conversion" as items indicating selectable services are displayed under the display title.

If the service definition information 25 regarding "Ticket Issue Service" is received, a service selection screen shown in Fig. 4D is displayed on the display 52. Specifically, a character string "Ticket Issue Service" as a display title is displayed at the top of the screen, and event names corresponding to tickets issued in the service are displayed as selectable items under the display title. Each item on the service selection screen has been associated with an ID of service definition information 25 of each service or event. By this configuration, when a selection of an item is confirmed by the user, the MFP 10 requests a service corresponding to a selected item from the function server 30.

The MFP 10 displays upward/downward arrows (triangles) on the right side on the display 52 to allow the user to scroll up or down the displayed items if all of the items can not be displayed on the display 52 simultaneously due to the limitations of the size of a display area.

If it is judged in step S 110 that a service to be requested from the function server 30 is not selected from a service list (S110: NO), control proceeds to step S 118 where control unit 11 generates an address input screen for allowing a user to directly input a URL, and displays the input screen on the display 52. Then, control proceeds to step S 120.

After the service selection screen or the address input screen is displayed, a user selects one of the items, inputs an address, or ends the service mode through use of the operation unit 12.

In step S120, the control unit 11 waits for a user operation performed via the operation unit 12 on the service selection screen or the address input screen. If the user operation is performed, control proceeds to step S122 where the control unit 11 judges whether the user operation is an operation for selecting a link. Specifically, in step S122, the control unit 11 judges that the user operation is an operation for selecting a link if a selection is made successfully by a user on the service selection screen displayed in step S 116 or if a URL is successfully inputted to the input screen displayed in step S 118.

If the user operation is not an operation for selecting a link (S122: NO), control proceeds to step S124 where the control unit 11 judges whether the user operation accepted at step S120 is an operation for ending the service mode. If the user operation is an operation for ending the service mode (S124: YES), control returns to step S104. That is, in this case the process as a service mode terminates.

If it is judged in step S124 that the user operation is not an operation for ending the service mode (S 124: NO), control proceeds to step S 126 where the control unit 11 produces a beeping sound. Then, control returns to step S120. That is, if the user operation accepted in step S 120 is not an operation for selecting a link and is not an operation for ending the service mode, the beep sound is produced to notify a user that the user operation is invalid.

If the user operation is an operation for selecting a link (S122: YES), control proceeds to step S128 where the control unit 11 judges whether the selected link is represented by a URL for a service.

If the selected link is not represented by a URL for a service (i.e., the selected link is an ID of the service definition information) (S128: NO), control proceeds to step S 130 where the control unit 11 requests a service list from the directory server 20, and then receives service definition information 25. Then, control returns to step S116 to display a new service selection screen on the display 52.

If the selected link is represented by a URL of a service (S128: YES), control proceeds to step S 132 where a session process (which is explained in detail later) is executed. After step S 132 is finished, control returns to step S104. The service mode process is thus terminated.

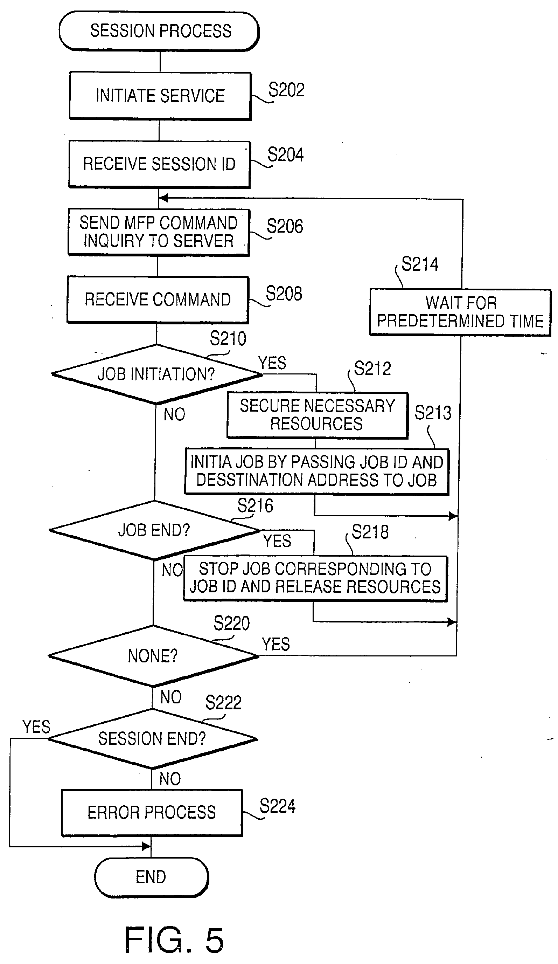

Hereafter, the session process executed in step S132 of the MFP process (Fig. 3) will be explained referring to a flowchart of Fig. 5.

At the start of the session process, the MFP 10 activates a service corresponding to a link location selected at step S120 (or corresponding to an address if the address is directly inputted by a user) (S202). The MFP 10 sends a service initiation command to the link location as an HTTP request to instruct the function server 30 to initiate a service selected in step S120. After receiving the service initiation command, the function server 30 sends a session ID back to the MFP 10 as an HTTP response.

In response to the service initiation command of S201, the MFP 10 receives a session ID from the function server 30 (S204). Each of HTTP requests and HTTP responses exchanged between the MFP 10 and the function server 30 includes a session ID, and the function server 30 is able to manage devices (i.e., conduct session management) communicating with the function server 30 in accordance with session IDs contained in HTTP requests or HTTP responses.

Subsequently, the MFP 10 transmits the "MFP command inquiry" (inquiring about instructions to the MFP 10) to the function server 30 (S206). After receiving the MFP command inquiry from the MFP 10, the function server 30 sends a command back to the MFP 10 if a command to be sent to the MFP 10 is issued in processes of the function server 30. In response to the MFP command inquiry of S206, the MFP 10 receives a command from the function server 30 (S208).

Subsequently, the MFP 10 judges whether the command received in S208 is a job initiation command (S210). The job initiation command is issued by the function server 30 after the function server 30 receives the service initiation command. The type of a job to be executed by the MFP 10 is decided by the function server based on various factors including when an inquiry is received and the type of a service to be initiated. A job ID of the job to be initiated, the type of the job, and a destination address of the job are contained in the job initiation command.

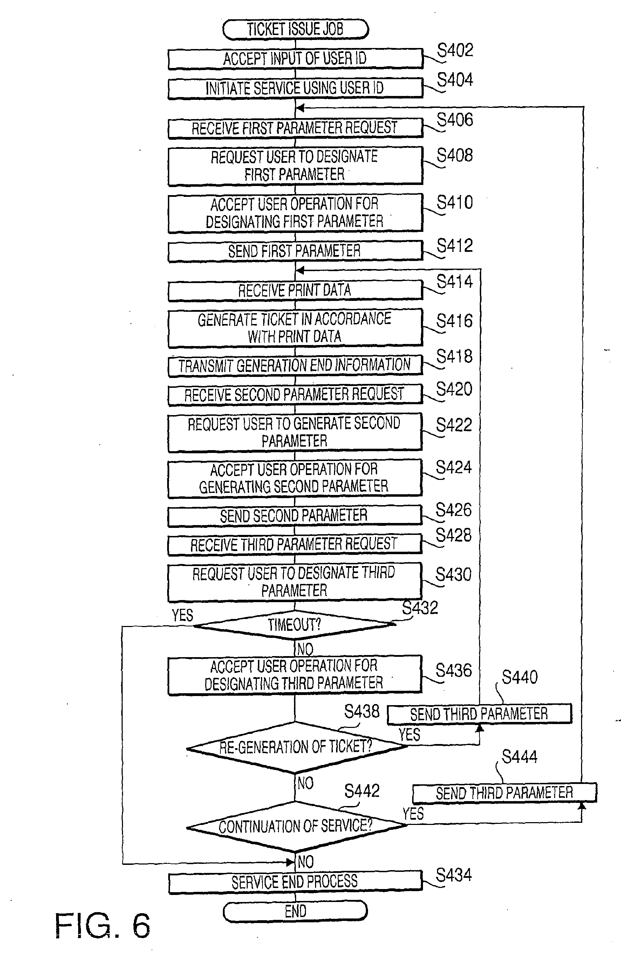

If the command received in S208 is a job initiation command (S210: YES), the MFP 10 reserves resources necessary for initiating the job (S212), and starts a process for initiating the designated job (S213). The control unit 11 initiates the designated job by passing the job ID and the destination address. The job thus initiated is executed concurrently with other processes. That is, various services can be performed concurrently in the service providing system 100. In this illustrative embodiment, a ticket issue service will be explained later with reference to Fig. 6 which is a flowchart of a ticket issue job.

After the job is initiated, the control unit 11 waits a prescribed time interval (S214). Then, control returns to step S206.

If the command received in S208 is not a job initiation command (S208: NO), the MFP 10 judges whether the command is a job end command (S216). The job end command is issued in the function server 30 at the time of termination of the job. A Job ID of the terminated job is contained in the job end command.

If the command received in S208 is a job end command (S216: YES), the MFP 10 ends the job corresponding to the job ID while releasing the resources (S208), and waits the prescribed time interval (S214). Then, control returns to step S206.

If the command received in S208 is not a job end command (S216: NO), the MFP 10 judges whether the command indicates "no command", that is, whether the response to the MFP command inquiry indicates that there is no command (S220).

If the command received in S208 indicates "no command" (S220: YES), the MFP 10 waits the prescribed time interval (S214), and control returns to step S206.

If the command received in S208 does not indicate "no command" (S220: NO), the MFP 10 judges whether the command is a session end command (S222). The session end command is issued in the function server 30 at the time of termination of the service for the MFP 10.

If the command received in S208 is the session end command (S222: YES), the MFP 10 ends the session process. If the command received in S208 is not the session end command, that is, if the command is none of the job initiation command, the job end command, the "no command" or the session end command (S222: NO), the MFP 10 executes a command error process (e.g. displaying an error message on the display 52) (S224). Then, the session process terminates.

Hereafter, a ticket issue job, which is one of jobs to be executed in step S213 of the session process, will be explained with reference to Fig. 6. The ticket issue job is executed under control of the control unit 11 of the MFP 10. First, the control unit 11 displays an ID input screen on the display 52 to request a user to input a user ID through the ID input screen. If a user operation for inputting a user ID is accepted (S402), the control unit 11 instructs the function server 30 to initiate a ticket issue service based on the user ID (S404). Specifically, in step S404, the control unit 11 sends a service initiation command accompanied by the inputted user ID to an address of the ticket issue service indicated in the service definition information 25 as an HTTP request.

The function server 30 which received the service initiation command sends a first parameter request accompanied by the session ID to the MFP 10 as an HTTP response. The first parameter request is issued in the function server 30 after the function server 30 receives the service initiation command. The first parameter request (e.g., seat types) is data described by XML.

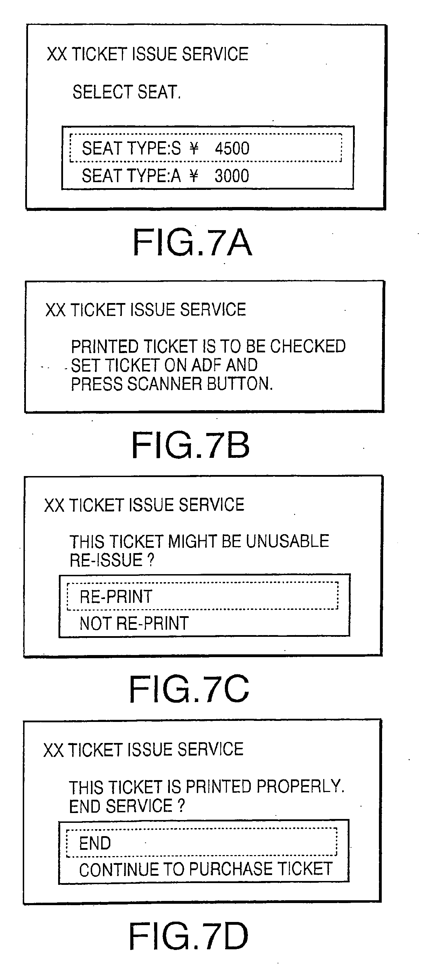

In step S406, the control unit 11 receives the first parameter request and the session ID from the function server 30. As described above, each of the HTTP requests and HTTP responses exchanged between the MFP 10 and the function server 30 includes a session ID, and therefore the MFP 10 is able to recognize the session ID from an HTTP request or an HTTP response. Next, the control unit 11 displays a parameter input screen for allowing a user to designate a first parameter based on the XML data of the first parameter request (S408). Fig. 7A is an example of a parameter input screen. As shown in Fig. 7A, an event name ("XX") as a display title is displayed at the top portion of the screen. Seat types of the event are displayed under the display title as selectable items. After the parameter input screen is displayed on the display 52, the user is able to select one of the seat types as a first parameter.

If a user operation for designating the first parameter is accepted (S410), the control unit 11 sends the first parameter to the function server 30 as an HTTP request (S412). After receiving the first parameter, the function server 30 sends print data for printing out a ticket corresponding to the first parameter (the designated seat type) back to the MFP 10.

After receiving the print data from the function server 30 (S414), the control unit 11 records an image corresponding to the print data on a recording medium through use of the recording unit 14 (S416).

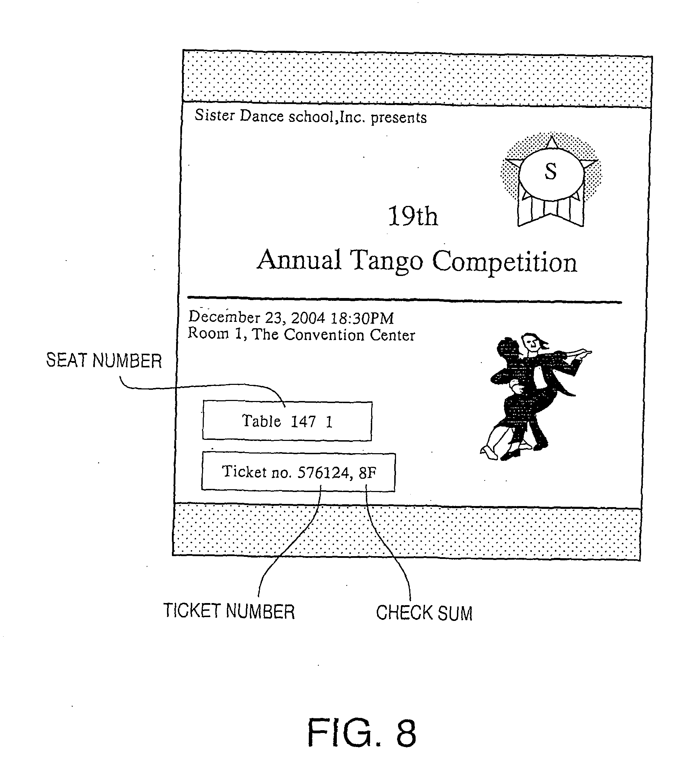

Fig. 8 shows an example of the ticket recorded by the recording unit 14. As shown in Fig. 8, in addition to an element (image data) determining a design of a ticket, the image of the ticket includes the seat number corresponding to the seat type indicated by the first parameter, a unique ticket number, and a string (e.g. a check sum code) for error detection generated based on the ticket number.

After the generation of the ticket is finished, the control unit 11 sends generation end information to the function server 30 as an HTTP request to notify the function server 30 of completion of ticket generation (S418). After receiving the generation end information, the function server sends a second parameter request back to the MFP 10 as an HTTP response. The second parameter request is issued in the function server 30 after the function server receives the generation end command. The second parameter request is XML data for requesting the MFP 10 to send image data to be obtained by scanning the ticket generated in step S416.

In step S420, the control unit 11 receives the second parameter request from the function server 30. Next, the control unit 11 displays a parameter input screen for allowing a user to designate a second parameter based on the XML data of the second parameter request (S422). Fig. 7B is an example of a parameter input screen. As shown in Fig. 7A, the parameter input screen includes a message requesting a user to set the generated ticket on an ADF (Auto Document Feeder). After the parameter input screen is displayed on the display 52, the user sets the generated ticket on the ADF and presses the scanner key 42 of the operation unit 42, so that image data of the ticket obtained by the recording unit 13 is generated as a second parameter.

After a user operation for generating the second parameter is conducted (S424), the control unit 11 sends the second parameter to the function server 30 as an HTTP request (S426). After receiving the second parameter, the function server 30 sends a third parameter request back to the MFP 10 as an HTTP response. The third parameter request is issued in the function server 30 after the function server 30 receives the second parameter.

The third parameter request is XML data for requesting the MFP 10 to designate subsequent processes. More specifically, the function server 30 checks whether the ticket contained in the second parameter request is successfully printed out based on the print data transmitted in step S414, and sends a third parameter request for requesting the MFP 10 to designate a process to be processed (a process according to the check result) back to the MFP 10 together with the check result.

In step 5428, the MFP 10 receives the third parameter request from the function server 30. Next, the control unit 11 displays a parameter input screen for allowing a user to designate a third parameter based on the XML data of the third parameter request (S430). If the third parameter request is generated based on the check result indicating that print out of the ticket is unsuccessful, a message indicating that there is a possibility that the ticket is unusable because print out of the ticket is unsuccessful is displayed at the top portion of the screen (see Fig. 7C). An item ("to execute re-printing") for instructing the MFP 10 to execute re-printing and an item ("not to execute re-printing") for instructing the MFP 10 not to execute re-printing are also displayed under the message as selectable items.

If the third parameter request is generated based on the check result indicating that print out of the ticket is successful, a message indicating that the ticket is printed out successfully is displayed at the top portion of the screen (see Fig. 7D). Items ("End", "Purchase Tickets Again") for determining whether to continue the ticket issue service are displayed under the message on the screen (see Fig. 7D).

After the parameter input screen is displayed on the display 52, the user designates one of items. Next, the control unit 11 judges whether timeout occurs (S432). If a predetermined time has elapsed in a state where no user operation is conducted through the parameter input screen since the parameter input screen is displayed on the display 52 (i.e., timeout occurs), (S432:YES), control proceeds to step S434 where a service end process is executed. Then, the ticket issue job terminates.

In the service end process (S434), the control unit 11 sends a service end command to the function server 30 as an HTTP request, and receives a service end confirmation from the function server 30 as an HTTP response.

If a user operation for designating a third parameter is conducted before the timeout occurs (S432: NO, S436), control proceeds to step S438. In step S438, the control unit 11 checks the parameter. If the third parameter is a parameter for generating the ticket again (i.e., if the item "to execute re-printing" has been designated) (S438: YES), the control unit 11 sends the third parameter to the function server as an HTTP request (S440). Then, control returns to step S414. Since the function server 30 which received the third parameter in step S440 sends print data again to the MFP 10 as an HTTP response, the MFP 10 receives the print data again in step S414.

If the judgment result of step S438 is NO, control proceeds to step S442 where the control unit 11 checks the third parameter. If the third parameter is a parameter for continuing the ticket issue service (i.e., if the item "Purchase Ticket Again" has been selected) (S442:YES), control proceeds to step S444 where the third parameter is sent to the function server 30. Then, control returns to step S406. Since the function server 30 which received the third parameter in step S444 sends the first parameter again to the MFP 10 as an HTTP response, the MFP 10 receives the first parameter again in step S406.

If the third parameter designated in step S436 is a parameter other than the parameters described above (i.e., if the third parameter is "not to execute re-printing" or "End") (S442: NO), control proceeds to step S434 where the service end process is executed. Then, the ticket issue process terminates.

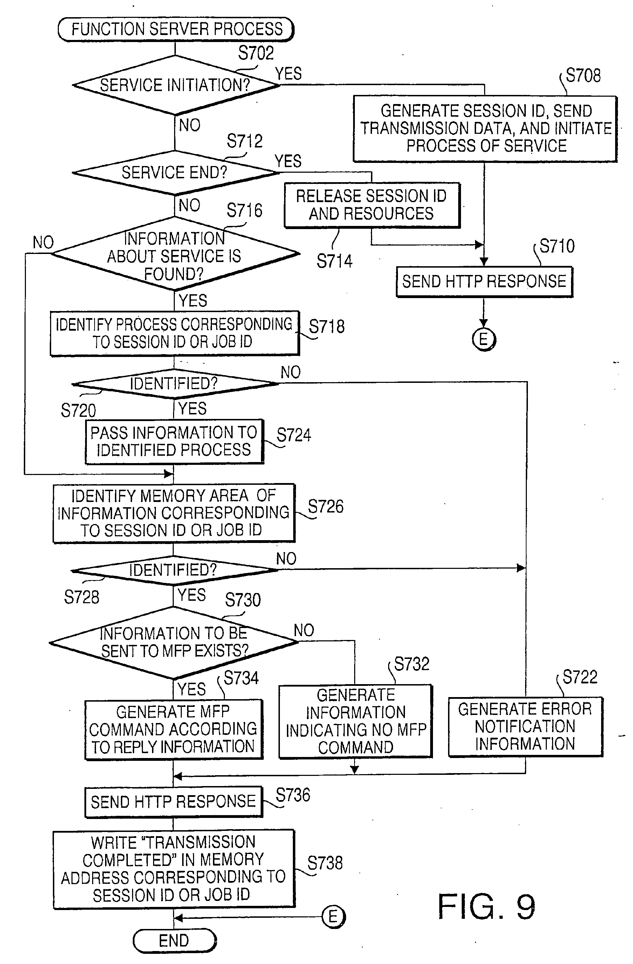

Hereafter, a function server process executed under control of the control unit 31 of the function server 30 will be explained with reference to Fig. 9. The function server process is started when an HTTP request is received by the function server 30.

First, the function server 30 judges whether the received HTTP request is the service initiation command (S702). Incidentally, the service initiation command is transmitted by the MFP 10 in step S202 of the session process (Fig. 5).

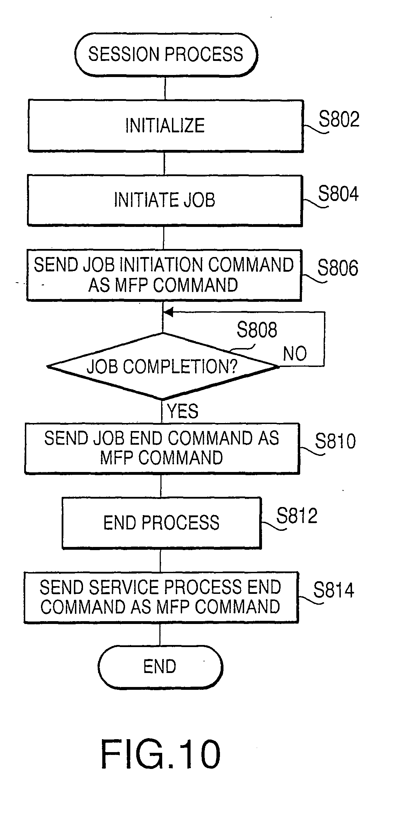

If the received HTTP request is the service initiation command (S702: YES), the control unit 31 generates a session ID and transmission data representing the session ID, secures resources for execution of a service, and then initiates a session process (see Fig. 10) (S708). Next, the control unit 11 sends the transmission data back to the MFP 10 as an HTTP response (S710). Then, the function server process terminates. It should be noted that the transmission data (session ID) is received by the MFP 10 in step S204 of the session process (Fig. 5).

If it is judged in step S702 that the HTTP request is not the service initiation command (S702: NO), the control unit 31 judges whether the HTTP request is a service end command (S712). It should be noted that the service end command is transmitted from the MFP 10 in step S434 (see Fig. 6) or the service end command is transmitted from the MFP 10 when a user operation for terminating the service (e.g., pushing the cancel key 51) is conducted.

If the HTTP request is a service end command (S712: YES), the control unit 31 releases the session ID and the resources secured in step S708, and generates a session end command (S714). Next, the control unit 31 sends the session end command back to the MFP 10 as an HTTP response (S710). Then, the function server process terminates. It should be noted that the session end command is received by the MFP 10 in step S208, and reception of the session end command is confirmed in step S222 as shown in Fig. 5.

If it is judged in step S712 that the HTTP request is not a service end command (S712: NO), the control unit 31 judges whether the HTTP request contains information about a service (S716). Specifically, the control unit 31 judges whether the HTTP request is issued by the MFP 10 in one of the session processes or a job (e.g., an input/output job or a ticket issue job).

If the HTTP request contains information about the service (S716:YES), the control unit 31 identifies the process (the session process, input/output job, or the ticket issue job) that transmitted the HTTP request (S718). If the process can not be identified (S720: NO), control proceeds to step S722 where the function server 30 generates error notification information. Then, control proceeds to step S736.

If the process can be identified (S720: YES), the function server 30 sends the information supplied together with the HTTP request to the identified process (S724). Then, control proceeds to step S726. If there exists no information about the service contained in the HTTP request (S716: NO), control directly proceeds to step S726. In step S726, the control unit 31 identifies a memory area storing information corresponding to the session ID or job ID.

Subsequently, the function server 30 judges whether the memory are storing the information corresponding to the session ID or job ID can be identified (S728). If the memory area can not be identified (S728: NO), the function server 30 generates error notification information (S722). Then, control proceeds to step S736.

If the memory area can be identified (S728: YES), the function server 30 judges whether there exists reply information to be sent back to the MFP 10 (S730). If there exists reply information to be sent back to the MFP 10 (S730: YES), the function server 30 generates an MFP control command based on the return information (S734). Then, control proceeds to step S736. If there exists no reply information to be sent back to the MFP 10 (S730: NO), the function server 30 generates information indicating "no MFP command" (S732). Then, control proceeds to step S736.

In step S736, the control unit 31 sends information generated in one of steps S722, S732 and S734 to the MFP 10 as an HTTP response. The error notification information generated in step S722 is received by the MFP 10 in step S208, and is used in step S224. The information of "no command" is received by the MFP 10 in step S208, and reception of the "no command" is confirmed in step S220. The MFP control command generated in step S734 varies depending on the job type, and is received by the MFP 10 in respective jobs.

In step S738, the control unit 31 assigns information "transmission completion" to a memory address corresponding to the session ID or job ID. Then, the function server process terminates.

Hereafter, a session process executed under control of the control unit 31 of the function server 30 will be explained with reference to Fig. 10. The session process is executed concurrently with the function server process.

First, the control unit executes an initialization process (S802). Next, the control unit 31 initiates a job corresponding to the service designated by the service initiation command (S804). It should be noted that the service initiation command is issued by the MFP 10 in step S202, and reception of the service initiation command is confirmed by the function server 30 in step S702 of the function server process.

Next, in step S806, the control unit 31 issues an MFP command corresponding to the initiated job. Specifically, in step S806, the control unit 31 writes a job initiation command in a memory area for storing reply information, together with a job ID and a destination address. Based on the reply information, the MFP command is generated in step S734, and the reply information is sent to the MFP 10 as a job initiation command. The job initiation command is received by the MFP 10 in step S208 (see Fig. 5), and the job designated by the job initiation command is initiated by the MFP in step S213.

Next, the control unit 31 waits until the job initiated in step S804 terminates (S808: NO). If the job terminates (S808: YES), the control unit 31 sends a job end command for the initiated job to the MFP 10 as an MFP command (S810). Specifically, the control unit 31 writes the job end command and the job ID in the memory area for the reply information. Based on the reply information, the MFP command is generated in step S734, and the reply information is sent to the MFP 10 as a job end command. The job end command is received by the MFP 10 in step S208 (see Fig. 5), and the job designated by the job end command is terminated in the MFP in step S218.

Next, in step S812, the control unit 31 executes an end process including an operation for releasing the resources for the job. Then, the session process of the function server 30 terminates. Specifically, in step S812, the control unit 31 writes the session end command in the memory area for storing the reply information. Based on the reply information, the MFP command is generated in step S734, and the reply information is sent to the MFP 10 in step S736. The session end command is received by the MFP 10 in step S208 (see Fig. 5), and the reception of the session end command is confirmed by the MFP 10 in step S222.

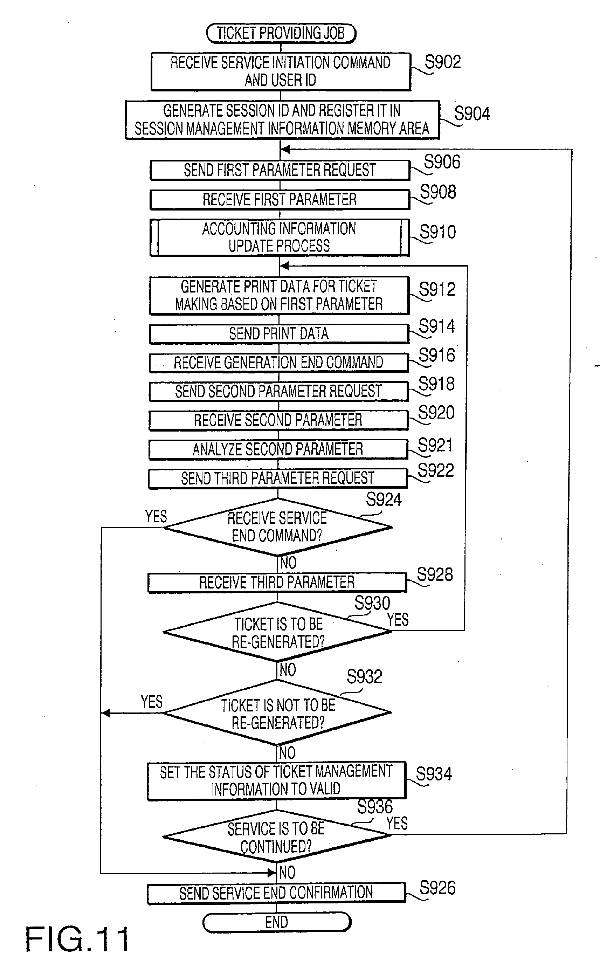

Hereafter, a ticket providing job executed as one of the jobs initiated in step S804 under control of the control unit 31 of the function server 30 will be explained with reference to Fig. 11. First, the control unit 31 of the function server 30 receives a user ID and a service initiation command (S902). Then, the control unit 31 generates a session ID used for the session management to be conducted with the MFP 10 (which sent the user ID and the service information command to the function server 30), and stores the session ID in the session management information memory area 140 (S904).

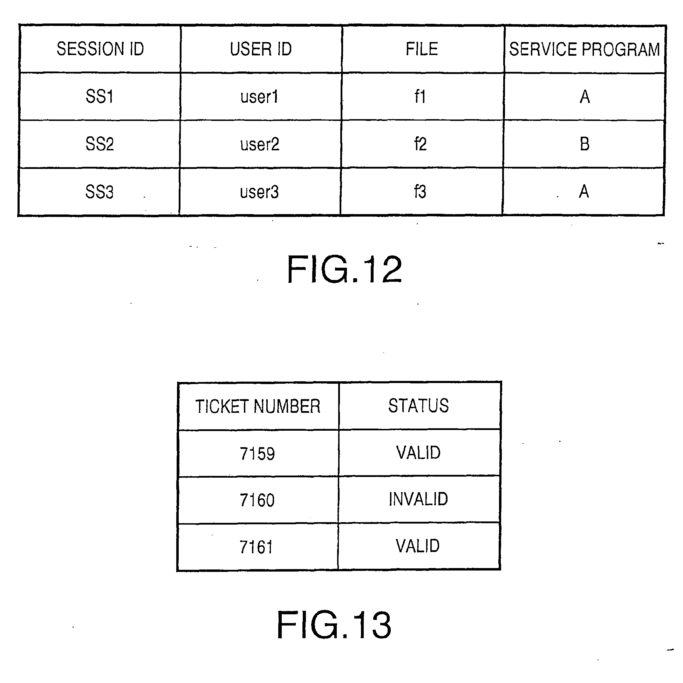

Fig. 12 shows an example of a data structure of session management information stored in the session management information memory area 140. As shown in Fig. 12, the session management information is configured as a database in which a session ID is associated with some types of data including a user ID. In step S904, the generated session ID and the user ID obtained in step S902 are stored in the session management information while the generated session ID and the user ID are associated with each other.

Next, the control unit 31 sends a first parameter request back to the MFP 10 as an HTTP response (S906). As described above, the first parameter request is XML data for requesting a first parameter (e.g., sheet types) from the MFP 10, and is received by the MFP 10 in step S406 of the ticket issue job (see Fig. 6). After receiving the first parameter request, the control unit 31 sends the first parameter as an HTTP request to the function server 30.

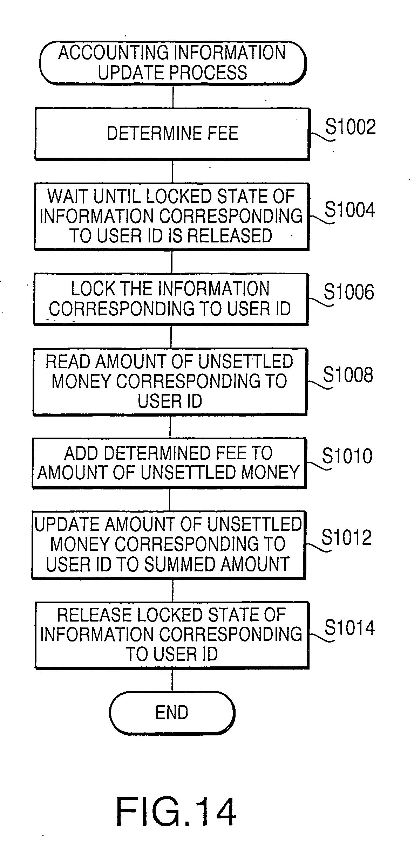

After the control unit 31 receives the first parameter in step S908, the control unit 31 executes an accounting information update process (S910). The accounting information update process (which will be explained later with reference to Fig. 14) is a process for billing a user who is receiving the ticket issue service.

Next, in step S912, the control unit 31 generates print data required to generate a ticket in the MFP 10 based on the first parameter. Specifically, in step S912, image data as shown in Fig. 8 is generated as print data, and is stored in the service output memory area 150. As shown in Fig. 8, an image of a ticket is formed as a composite image in which an image of the seat number corresponding to the seat type indicated by the first parameter, a unique ticket number, and a string (e.g. a check sum code) for error detection generated based on the ticket number are superimposed on an image (image data stored in advance in the storage unit 33) determining the entire design of a ticket.

In step S912, the ticket number assigned to the print data is also stored in the ticket management information (a database shown in Fig. 13) stored in the ticket management information memory area 160. The ticket management information has a data structure in which a ticket number assigned to each piece of print data is associated with status information indicating whether the ticket generated based on the corresponding print data is valid. When the ticket number is stored at step S912, the status information is set to "invalid".

Next, in step S914, the control unit 31 sends the print data generated in step S912 back to the MFP 10 as an HTTP response. The print data is received by the MFP 10 in step S414 of the ticket issue job. After the MFP 10 generates the ticket based on the received print data, the MFP 10 sends generation end information to the function server 30 as an HTTP request.

After the control unit 31 receives the generation end command from the MFP 10 (S916), the control unit 31 sends a second parameter request back to the MFP 10 as an HTTP response (S918). The second parameter request is XML data for requesting the MFP 10 to send a second parameter (e.g., image data obtained by scanning a ticket), and is received by the MFP 10 in step S420 as an HTTP request. After the MFP 10 receives the second parameter request, the MFP 10 sends the second parameter to the function server 30 in step S426 of the ticket issue job (Fig. 6).

After the control unit 31 receives the second parameter from the MFP 10 (S920), the control unit analyzes the second parameter (S921). Specifically, the control unit 31 performs an OCR (Optical Character Recognition) operation for the image data contained in the second parameter to obtain the ticket number, which is located at a predetermined position on the ticket, and a string for error detection (check sum) from the image data. Then, the control unit 31 checks whether the ticket number is valid based on the string for error detection. If the ticket number is valid, the control unit 31 judges whether the ticket number obtained from the image data coincides with the ticket number assigned to the print data generated in step S912. If the ticket number obtained from the image data coincides with the ticket number assigned to the print data generated in step S912, the control unit 31 concludes that the result of the analysis is "normal".

Next, the control unit 31 sends a third parameter request generated according to the result of the analysis back to the MFP 10 as an HTTP response (S922). Specifically, if the result of the analysis is "abnormal", the control unit 31 sends XML data for notifying a user of a message indicating that there is a possibility that the ticket is unusable and for allowing the user to decide whether to re-generate (re-print) a ticket to the MFP 10 as a third parameter request.

If the result of the analysis is "normal", the control unit 31 sends XML data for notifying a user of a message indicating that the ticket is printed out successfully and for allowing the user to decide whether to continue the ticket issue service to the MFP 10 as a third parameter request.

As described above, the third parameter request which is received by the MFP 10 in step S428 of the ticket issue job (Fig. 6) is XML data functioning as a command for requesting the MFP 10 to prepare and send the third parameter. After the MFP 10 receives the third parameter request, the MFP sends the service end command in step S434 and the third parameter in step S440 or S444 as shown in Fig. 6.

Next, the control unit 31 checks whether the service end command is received from the MFP 10 (S924). If the service end command is received (S924: YES), the control unit 31 sends a service end confirmation indicating that termination of the ticket issue service is confirmed to the MFP 10 as an HTTP response (S926). Then, the ticket providing job terminates. The service end confirmation is received by the MFP 10 in step S434 of the ticket issue job (Fig. 6).

If the service end command is not received (S924: NO), control proceeds to step S928 where the control unit 31 receives the third parameter from the MFP 10. Then, the control unit 31 judges whether the third parameter indicates re-generation of a ticket. If the third parameter indicates that re-generation of a ticket is required (S930: YES), control returns to step S912 to re-generate the print data. If the third parameter indicates that re-generation of a ticket is not required (S930: NO, S932: YES), control proceeds to step S926 where the control unit 31 sends the service end confirmation. Then, the ticket providing job terminates.

If the third parameter does not relate to in an item for designating necessity of re-generation of a ticket (S932: NO), control proceeds to step S934 where the control unit 31 updates the ticket management information so as to assign "valid" to the status information corresponding the ticket number of the print data generated in immediately preceding execution of step S912. Next, in step S936, the control unit 31 judges whether the third parameter indicates continuation of a ticket issue service. If the third parameter indicates the continuation of a ticket issue service (S936: YES), control returns to step S906. If the third parameter indicates termination of a ticket issue service (S936: NO), control proceeds to step S926 where the service end confirmation is issued. Then, the ticket issue job terminates.

Hereafter, the accounting information update process to be executed under control of the control unit 31 of the function server 30 will be explained with reference to Fig. 14. First, the control unit 31 determines a fee for the service (S1002). Specifically, the control unit 31 determines the fee according to the first parameter received in step S908.

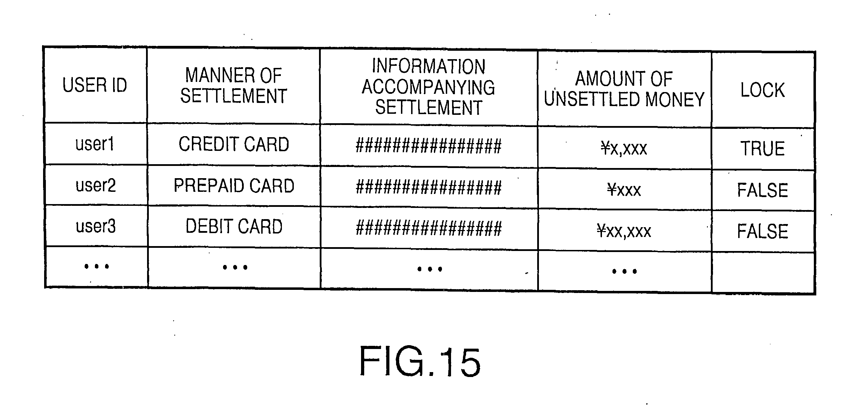

Next, the control unit 31 waits until a locked state of the information corresponding to the user ID obtained in step S902 is released (S1004). Fig. 15 shows an example of a data structure of accounting information stored in the accounting information memory area 130. As shown in Fig. 15, in the accounting information, each user ID is associated with some types of information including "the manner of settlement", "information accompanying the settlement", "the amount of unsettled money", and information indicating whether access to the accounting information is restricted. "TRUE" of item "Lock" in the accounting information indicates that access to the accounting information corresponding to the state "TRUE" is restricted. "FALSE" of item "Lock" in the accounting information indicates that access to the accounting information corresponding to the state "FALSE" is released.

If the state where access to the accounting information is released is reached, control proceeds to step S1006 where the control unit 31 sets the accounting information corresponding to the user ID obtained in step S902 to the locked state. That is, the control unit 31 assigned "TRUE" to the state of the item "Lock" corresponding to the user ID obtained in step S902.

Next, the control unit 31 reads out the amount of unsettled money corresponding to the user ID obtained in step S902, from the accounting information (S1008). Then, in step S 1010, the control unit 31 adds the fee determined in step S1002 to the amount of unsettled money obtained in step S1008. Next, in step S 1012, the control unit 31 replaces the amount of unsettled money corresponding to the user ID obtained in step S902 with the amount of money determined in step in S1010.

Then, the control unit 31 changes the locked state of the accounting information corresponding to the user ID to an unlocked state (S1014). That is, the control unit 31 assigns "FALSE" to the state of the item "Lock" corresponding to the user ID to allow access to the accounting information corresponding to the user ID.

The unsettled money registered in the accounting information may be used at regular time intervals to transfer money from the user's account to the account of a service provider offering the ticket issue service. After payment (e.g., transfer or withdrawal) is completed, the control unit 31 updates the accounting information to change the amount of unsettled money to zero.

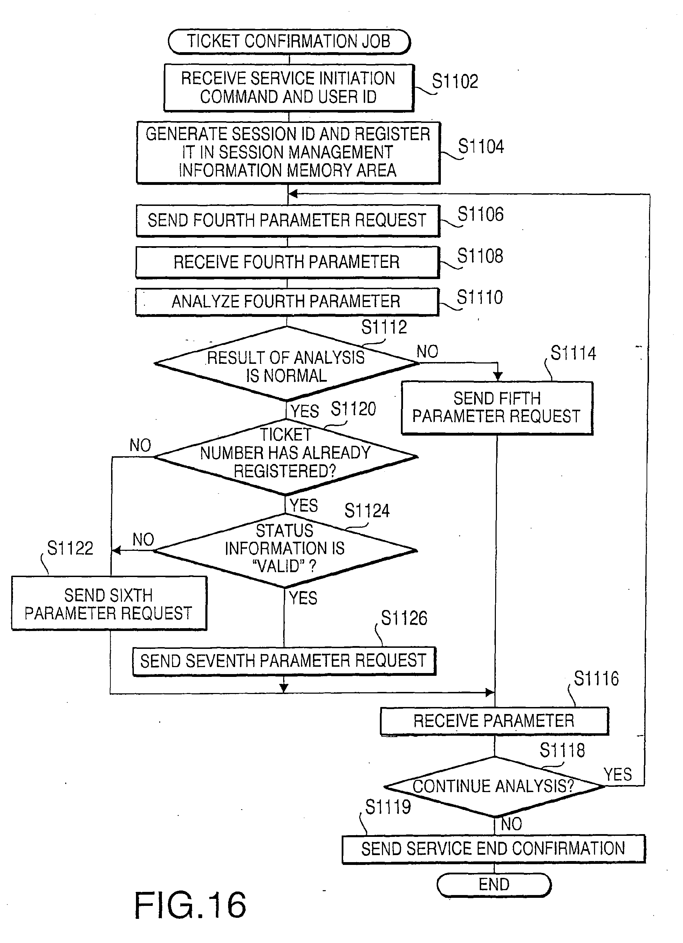

Hereafter, a ticket confirmation job executed under control of the control unit 31 of the function server 30 will be explained with reference to Fig. 16. The ticket confirmation job is initiated in step S804 when the function server 30 receives a service initiation command from the ticket inspecting device 60.

First, the control unit 31 of the function server 30 receives a user ID and a service initiation command from the ticket inspecting device 60 (S 1102). Then, the control unit 31 generates a session ID for conducting session management with the ticket inspecting device 60, and stores the session ID in the session management information memory area 140 (S1104). Specifically, the control unit 31 registers the generated session ID and the user ID received in step S 1102 in the session management information stored in the session management information memory area 140.

Next, the control unit 31 sends a fourth parameter request back to the ticket inspecting device 60 as an HTTP response together with the session ID (S 1106). The fourth parameter request is XML data for requesting the ticket inspecting device 60 to generate a fourth parameter (e.g., image data obtained by scanning a ticket). After receiving the fourth parameter request, the ticket inspecting device 60 sends the fourth parameter to the function server 30 as an HTTP request.

After the control unit 31 receives the fourth parameter (S1108), the control unit 31 analyzes the fourth parameter (S 1110). Specifically, the control unit 31 performs an OCR operation for the image data contained in the fourth parameter to obtain the ticket number and a string for error detection (check sum) from the image data. Then, the control unit 31 checks whether the ticket number is valid based on the string for error detection.

Next, the control unit judges whether the result of the analysis is "normal" (S1112). If the ticket number and a string for error detection are read successfully, and validity of the ticket number is confirmed based on the string for error detection, then the control unit 31 concludes that the result of the analysis is "normal". If the ticket number is successfully obtained but is judged to be invalid, the control unit 31 concludes that the result of the analysis is "abnormal".

If the result of the analysis is "abnormal" (S 1112: NO), the control unit 31 sends a fifth parameter request back to the ticket inspecting device 60 as an HTTP response (S1114). The fifth parameter request is XML data requesting the ticket inspecting device 60 to send a fifth parameter (e.g., information indicating whether to continue analysis) to the function server 30. after receiving the fifth parameter request, the ticket inspecting device 60 sends the fifth parameter to the function server 30 as an HTTP request.

After the control unit 31 receives the fifth parameter (S1116), the control unit checks the fifth parameter. If the fifth parameter is information requesting continuation of the analysis (S 1118: YES), control returns to step S 1106. if the fifth parameter is information requesting termination of the analysis (S 1118: NO), the control unit 31 sends a service end confirmation indicating termination of the ticket confirmation service to the MFP 10 as an HTTP response (S1119). Then, the ticket confirmation job terminates.

If the control unit 31 concludes that the result of the analysis is "normal" (S 1112: YES), control proceeds to step S1120 where the ticket number obtained as above has been already registered in the ticket management information (see Fig. 13) and stored in the ticket management information memory area 160.

If the ticket number has not been registered in the ticket management information (S 1120: NO), the control unit 31 sends a sixth parameter request back to the ticket inspecting device 60 as an HTTP response (S 1122). If the ticket number has been already registered in the ticket management information (S 1120: YES), control unit 31 consults the ticket management information to check whether status information corresponding to the ticket number is set as "valid" (S 1124). The sixth parameter request to be issued in step S 1122 is XML data requesting the ticket inspecting device 60 to send the fifth parameter, while a message contained in the sixth parameter is different from that of the fifth parameter request. After receiving the sixth parameter request, the ticket inspecting device 60 sends the sixth parameter back to the function server 30 as an HTTP response.

If the status information corresponding the ticket number is set as "invalid" (SS 1124: NO), control proceeds to step S1124 where the sixth parameter request is transmitted. If the status information corresponding to the ticket number is set as "valid", the control unit 31 sends a seventh parameter request back to the ticket inspecting device 60 as an HTTP response (S 1126). The seventh parameter request to be issued in step S 1126 is XML data requesting the ticket inspecting device 60 to send the fifth parameter, while a message contained in the sixth parameter is different from that of the fifth parameter request or the sixth parameter request. After receiving the sixth parameter request, the ticket inspecting device 60 sends the sixth parameter back to the function server 30 as an HTTP response.

In step S 1116, the control unit 31 receives the fifth parameter from the ticket inspecting device 60. Then, the control unit 31 checks the fifth parameter. If the fifth parameter is information indicating continuation of the analysis (S1118: YES), control returns to step S1106. If the fifth parameter indicates the termination of the analysis (S1118: NO), the control unit 31 sends a service end confirmation. Then, the ticket conformation job terminates.

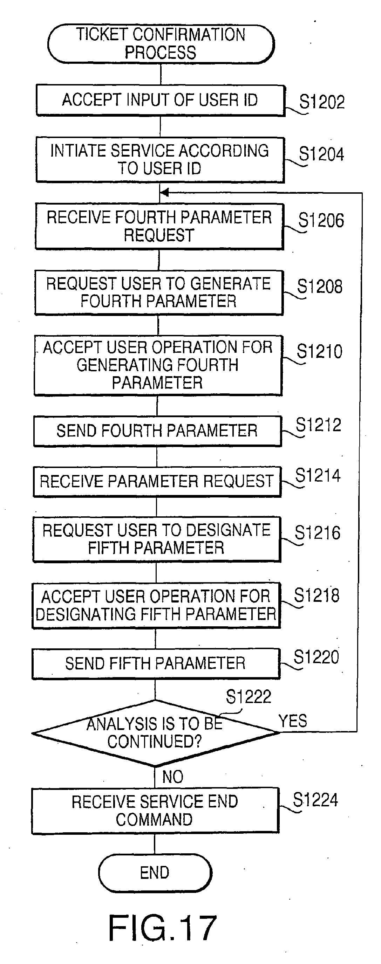

Hereafter, a ticket confirmation process to be executed under control of the control unit 61 of the ticket inspecting device 60 will be explained with reference to Fig. 17. The ticket confirmation process is executed repeatedly after power of the ticket inspecting device 60 is turned to ON.

First, the control unit 61 displays an ID input screen for allowing a user to input a user ID (S1202). If a user operation is conducted by the user through the ID input screen, the control unit 61 causes the function server 30 to initiate a ticket confirmation service (S1204). Specifically, the control unit 61 sends a service initiation command and the inputted user ID to a previously determined address locating the ticket confirmation service, as an HTTP request, so that the ticket confirmation service is initiated in the function server 30.

After receiving the service initiation command, the function server 30 sends a fourth parameter request back to the ticket inspecting device 60 in step S1104 of the ticket confirmation job (Fig. 16). As described above, the fourth parameter, which is issued by the function server 30, is XML data requesting the MFP 10 to generate the fourth parameter (e.g., image data obtained by scanning a ticket).

Next, the control unit 61 receives the fourth parameter which the function server generates responsive to the service initiation command (S1206). It should be noted that each of HTTP requests and HTTP responses exchanged between the ticket inspecting device 60 and the function server 30 includes a session ID.

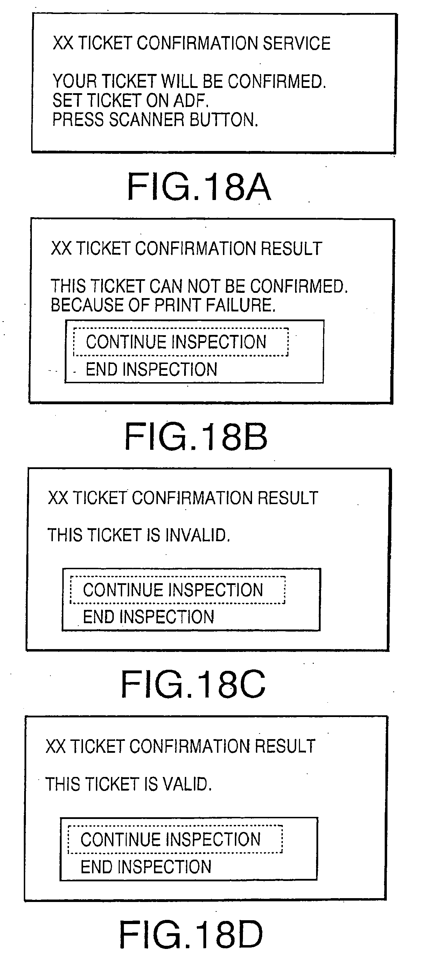

Next, the control unit 61 displays a parameter input screen for generating the fourth parameter according to the fourth parameter request to allow a user to conduct an operation for generating a fourth parameter (S 1208). Fig. 18A shows an example of a parameter input screen. As shown in Fig. 18A, the parameter input screen includes a message requesting a user to set a ticket on an ADF (automatic document feeder). After the user sets the ticket on the ADF, the user presses the scanner key on the operation unit 62. Then, the fourth parameter formed as image data obtained by scanning the ticket is generated.

After the parameter input screen is displayed, the control unit 61 accepts the user operation for generating the fourth parameter (image data) (S1210). The fourth parameter generated as above is transmitted to the function server 30 as an HTTP request (S1212). From the function server 30 which received the fourth parameter, the control unit 31 receives one of the fifth to seventh parameter requests as an HTTP response. As described above, the fifth to seventh parameter requests are generated in the function server 30 that received the fourth parameter request. The fifth parameter is XML data requesting the MFP 10 to send a command, indicating necessity to continue the analysis, to the function server 30.

Next, the control unit 61 receives the parameter request (one of fifth to seventh parameter requests) from the function server 30 (S 1214).

Then, in step S1216, the control unit 61 displays a parameter input screen so as to allow a user to designate a fifth parameter. Specifically, if the control unit 61 receives the fifth parameter request, the control unit 61 generates a message indicating that the analysis is finished unsuccessfully because of failure of print out of the ticket, according to the description of XML data of the received fifth parameter request, and displays the message as shown in Fig. 18B. In this case, messages ("continue inspection" and "end inspection") for allowing a user to decide whether to continue the inspection are also displayed on the parameter input screen as selectable items (see Fig. 18B).

If the control unit 61 receives the sixth parameter request, the control unit 61 displays a message indicating that the ticket is not registered normally, according to the description of XML data of the sixth parameter request (see Fig. 18C). In this case, messages ("continue inspection" and "end inspection") for allowing a user to decide whether to continue the inspection are also displayed on the parameter input screen as selectable items (see Fig. 18C).

If the control unit 61 receives the seventh parameter request, the control unit 61 displays a message indicating that the ticket is registered normally, according to the description of XML data of the seventh parameter request (see Fig. 18D). In this case, messages ("continue inspection" and "end inspection") for allowing a user to decide whether to continue the inspection are also displayed on the parameter input screen as selectable items (see Fig. 18D).

After the parameter input screen is displayed, the user is able to select one of the selectable items as a fifth parameter. After a user operation for designating the fifth parameter is finished (S1218), the control unit 61 sends the fifth parameter to the function server 30 as an HTTP request (S1220). Then, the control unit 61 judges whether to continue the analysis (S1222).

If the fifth parameter indicates the continuation of the analysis (S1222: YES), control returns to step S1206. If the fifth parameter indicates termination of execution of the analysis (S1222: NO), control proceeds to step S1224 where the control unit 61 receives a service end command from the function server 30. Then, the ticket confirmation process terminates.

As described above, after the MFP 10 generates a ticket in the ticket issue job (S416 of Fig. 6) and sends the second parameter (i.e., image data of the ticket) to the function server 30 (S424 or S426 of Fig. 6), the MFP 10 performs again the generation of the ticket, readout of the ticket and transmission of the second parameter (S416 to S426 of Fig. 6). The generation of the ticket, readout of the ticket and transmission of the second parameter are performed until the re-transmission of the image data from the function server 30 is stopped. In other words, repetition of these steps (the generation of the ticket, readout of the ticket and transmission of the second parameter) continues until the function server 30 sends the third parameter indicating that the result of the analysis of the image data of the printed image is "normal" is transmitted to the MFP 10 and the user of the MFP 10 decides to request re-transmission of data for the ticket. Therefore, the repetition of the steps mentioned above continues until the MFP 10 generates the ticket successfully.

If the MFP 10 fails in printing out a ticket due to, for example, mechanical trouble, the processes for printing out a ticket normally are executed repeatedly. Therefore, a user can obtain a correct ticket reliably.

The function server 30 checks validity of a ticket by comparing the ticket number obtained by scanning the image data of the ticket with the ticket number that the function server assigned to the ticket. Therefore, the validity of the ticket can be verified reliably.

If the result of the analysis performed by the function server 30 indicates that the ticket printed by the MFP 10 is invalid, and the function server 30 requests the MFP 10 to send the third parameter (see S921 and S922 of Fig. 11), re-transmission of the print data from the function server 30 to the MFP 10 does not start until the user of the MFP 10 decides to start the re-transmission of the print data (see S438 and S440 of Fig. 6). In other words, the user is able to suspend execution of the print operation for tickets. Even if a problem (e.g., running out of ink or sheets of paper) arises in a printing operation for tickets, the user is able to suspend (delay) printing a ticket until such a problem is resolved.

The function server 30 changes the status information of the ticket to "valid" (see S921 and S922 of Fig. 11), if the ticket is judged to be valid, i.e., the function server sends the third parameter indicating that the result of the analysis is normal (see S921 and S922 of Fig. 11). With regard to a ticket having status information of "invalid", the function server 30 is able to notify the status "invalid" of the ticket inspecting device 60 (see S 1124 and S 1122 of Fig. 16).

Even if a ticket is printed on the MFP 10 and an image of the printed ticket is recognizable, the validity of the ticket is checked in accordance with status information of the ticket. Therefore, the ticket inspecting device 60 is able to reliably find that the ticket is generated (printed) successfully and that the ticket is invalid.

The ticket inspecting device 60 sends an image of a ticket obtained by scanning the ticket to the function server 30 (S1212 of Fig. 17), and then receives the fifth parameter request containing the result of the analysis indicating whether the ticket is invalid (S1214 of Fig. 17). Therefore, the ticket inspecting device is able to check whether the ticket is valid reliably in accordance with the fifth parameter request.

According to the illustrative embodiment, it is possible to prevent dishonest use of a ticket judged to be printed improperly from occurring even if the printed image on the ticket is visibly recognizable.

Although the present invention has been described in considerable detail with reference to certain illustrative embodiments thereof, other embodiments are possible.

In the above mentioned illustrative embodiment, the MFP 10 is configured as a client device for receiving a ticket issue service from the function server 30 and generating tickets. However, another device such as a printer or a facsimile device may be configured as a client device for receiving the ticket issue service and generating tickets and such a client device may be employed in the system 100.

In the above mentioned illustrative embodiment, the MFP 10 and the ticket inspecting device 60 are configured as separate devices. However, a device having functions of both the MFP 10 and the ticket inspecting device 60 may be employed in the system 100.

In the above mentioned illustrative embodiment, the ticket management information is stored in the-storage device 33 of the function server 30. However, the ticket management information may be stored in a device other than the function server 30. In this case, the function server is configured to communicate with the device storing the ticket management information so that management of the ticket management information is executed on the device.

In the above mentioned illustrative embodiment, the function server 30 is configured to analyze the fourth parameter transmitted from the ticket inspecting device 60 and to send the result of the analysis back to the ticket inspecting device 60. However, the ticket inspecting device may be configured to have the function of analyzing the fourth parameter. In this case, the ticket inspecting device operates to analyze the scanned image of a ticket (the fourth parameter) while accessing the storage unit 33 of the function server 30.

In the above mentioned illustrative embodiment, the user of the MFP 10 is required to set the printed ticket on the ADF so as to read the image of the ticket by use of the reading unit 13. However, the MFP 10 may have a carrying mechanism configured to carry a printed ticket from the recording unit 13 to the reading unit 14. In this case, the user is not required to set the printed ticket on the ADF.

In the above mentioned illustrative embodiment, the function server 30 checks the validity of a ticket by comparing the ticket number read out from the ticket with the ticket number that the function server assigns to the ticket (S921 of Fig. 11). However, the function server 30 may be configured to store the entire image (or a part of the image) of the print data and to compare the entire (partial) image of the print data stored in the function server with the entire image (or a part of the image) of the ticket transmitted from the MFP 10 so that the checkup of the ticket can be attained without requiring the recognition of the ticket number. A layout of image elements of a ticket or a color scheme may be for the checkup of a ticket.

In the above illustrative mentioned embodiment, the ticket number (i.e., an identification of ticket data) is formed on a ticket as a character string. However, the ticket number may be formed on a ticket as a one-dimensional code (e.g., a barcode) or a two-dimensional code (e.g., a QR code). The ticket number may be printed on a ticket in a color (e.g., yellow) that is difficult to recognize visually, or may be formed on a ticket by fluorescent material so that the ticket number radiates light when receiving invisible light (i.e., so-called black light). The identification of the ticket data may be a unique symbol (e.g., one or more numbers or letters).

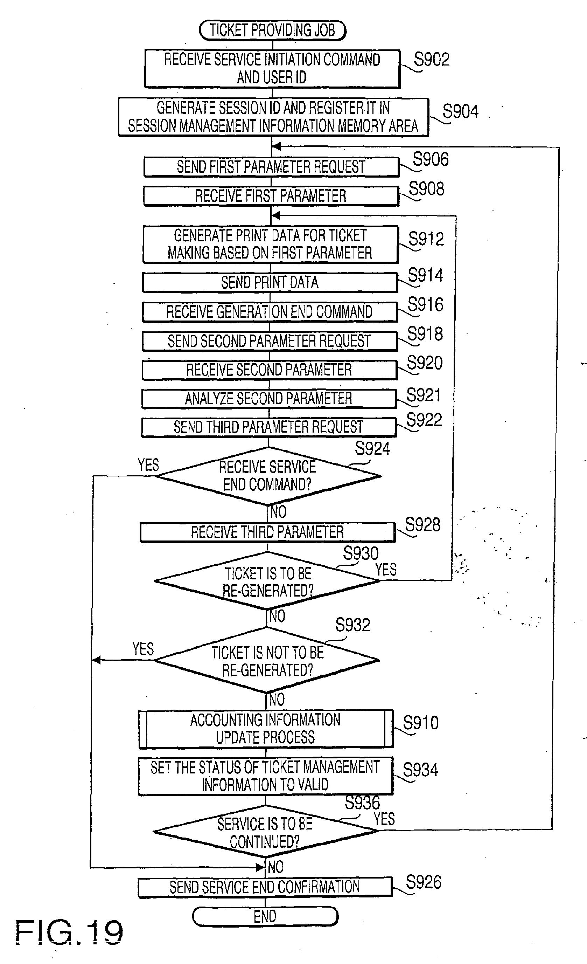

In the above mentioned illustrative embodiment, the function server 30 is configured to execute the accounting information up date process after the function server 30 receives the first parameter from the MFP 10. However, the function server 30 may be configured such that the accounting process is executed only when the ticket is successfully generated (printed) by the MFP 10. For example, the accounting process may be executed between S932 and S934 as shown in Fig. 19 which is a variation of the ticket providing job of Fig. 11. In Fig. 19, to steps which are the same as those of the ticket providing process of Fig. 11, the same step numbers are assigned. Alternatively, the accounting process may be executed between step S934 and S936.

## Claims

1. A system for providing tickets over a network comprising:
a server; and
a client device connected to the server via the network, the client device including
a ticket generating unit configured to receive ticket data from the server and generate a ticket by recording information represented by the ticket data on the ticket;
a reading unit configured to read the information recorded on the ticket; and
a client side transmission unit configured to transmit data representing the information recorded on the ticket read by the reading unit, to the server,
wherein the server includes
a ticket transmission unit configured to transmit the ticket data to the client device;
a judging unit configured to judge whether the ticket is properly generated in accordance with the data transmitted from the client side transmission unit after the ticket transmission unit transmits the ticket data; and
a re-transmission control unit configured to re-transmit the ticket data to the client device if the judging unit judges that the ticket is not properly generated, and
wherein the client device includes
a re-generation control unit configured to control the ticket generating unit, the reading unit and the client side transmission unit so that if the ticket data is re-transmitted from the server by the re-transmission control unit after the client side transmission unit transmits the data to the server, the ticket generating unit re-generating a ticket in accordance with the ticket data re-transmitted from the server by recording information represented by the re-transmitted ticket data on the re-generated ticket, the reading unit reading the information recorded on the re-generated ticket, and the client side transmission unit transmitting data representing the information recorded on the re-generated ticket to the server.

2. The system according to any preceding claim, wherein:
the ticket data includes identification data for identifying the ticket data; and
the judging unit judges that the ticket is properly generated if the data transmitted from the client side transmission unit is equivalent to the ticket data transmitted previously to the client device by the ticket transmission unit and is identified by the identification data of the data transmitted from the client side transmission unit.

3. The system according to any preceding claim, wherein the re-transmission control unit is configured to transmit generation command data for instructing the client device to generate the ticket if the judging unit judges that the ticket is not generated properly, to wait until request data for requesting the ticket data is transmitted from the client device after transmitting the generation command data, and to re-transmit the ticket data to the client device after receiving the request data from the client device.

4. The system according to any preceding claim, wherein:
the server includes a database recording unit that records the ticket data judged to be properly generated as valid ticket data in the database;
the re-transmission control unit is configured to transmit the ticket data to the client device, the ticket data being different from the ticket data previously transmitted by the ticket transmission unit; and
the re-generation control unit operates so that generation of a ticket in accordance with the ticket data re-transmitted from the server, reading of the information recorded on the re-generated ticket, and transmission of the data representing the information of the re-generated ticket to the server are performed in accordance with the ticket data being different from the ticket data previously transmitted by the ticket transmission unit.

5. The system according to claim 4, further comprising
a ticket inspecting device connected to the server, the ticket inspecting device including:
an inspecting device side reading unit configured to read information recorded on the ticket;
an inspecting device side transmission unit configured to transmit data representing the information of the ticket read by the inspecting device side reading unit, to the server; and
an inspection result notifying unit configured to receive inspection data from the server and to provide notification of an inspection result represented by the inspection data,
wherein the server includes:
an inspection unit configured to judge whether the ticket is properly generated in accordance with the data transmitted from the inspecting device side transmission unit, the ticket being properly generated if the ticket data corresponding to the data transmitted from the ticket inspecting device corresponds to the ticket data registered in the database; and
an inspection result transmission unit configured to transmit the inspection data to the ticket inspecting device, the inspection data being a result of the judgment made by the inspection unit.

6. The system according to any preceding claim, wherein the server includes an accounting unit configured to conduct an accounting process for generation of the ticket when the judging unit judges that the ticket is generated properly.

7. A client device connected to a server via a network, comprising:
a ticket generating unit configured to receive ticket data from the server and generate a ticket by recording information represented by the ticket data on the ticket;
a reading unit configured to read the information recorded on the ticket;
a client side transmission unit configured to transmit data representing the information recorded on the ticket read by the reading unit, to the server; and
a re-generation control unit configured to control the ticket generating unit, the reading unit and the client side transmission unit so that if the ticket data is re-transmitted from the server after the client side transmission unit transmits the data to the server, the ticket generating unit re-generating a ticket in accordance with the ticket data re-transmitted from the server, the reading unit reading the information recorded on the re-generated ticket, and the client side transmission unit transmitting data representing the information recorded on the re-generated ticket to the server.

8. A server connected to a client device via a network, comprising:
a ticket transmission unit configured to transmit ticket data for generating a ticket to the client device;
a judging unit configured to judge whether the ticket is properly generated in accordance with data transmitted from the client device after the ticket transmission unit transmits the ticket data, the data representing information on the ticket read by the client device; and
a re-transmission control unit configured to re-transmit the ticket data to the client device if the judging unit judges that the ticket is not properly generated.

9. An inspecting device connected to a server via a network, comprising:
an inspecting device side reading unit configured to read information recorded on a ticket;
an inspecting device side transmission unit configured to transmit data representing the information on the ticket read by the inspecting device side reading unit, to the server; and
an inspection result notifying unit configured to receive inspection data from the server and to provide notification of an inspection result represented by the inspection data.

10. A method of generating a ticket on a client device connected to a server via a network, comprising the steps of:
generating a ticket by recording information represented by ticket data on the ticket, in accordance with the ticket data transmitted from the server;
reading the information recorded on the ticket;
transmitting data representing the information recorded on the ticket to the server; and
repeating the generating step, the reading step and the transmitting step if the ticket data is re-transmitted from the server after the transmitting step transmits the data to the server.

11. A computer program product for use on a computer, the computer program product comprising a computer program that causes the computer, when executed, to perform a method of generating a ticket on the computer connected to a server via a network, the method comprising the steps of:
generating a ticket by recording information represented by ticket data on the ticket, in accordance with the ticket data transmitted from the server;
reading the information recorded on the ticket;
transmitting data representing the information recorded on the ticket to the server; and
repeating the generating step, the reading step and the transmitting step if the ticket data is re-transmitted from the server after the transmitting step transmits data to the server.

12. A method to be implemented on a server for enabling a client device connected to the server via a network to generate a ticket, comprising the steps of:
transmitting ticket data for generating a ticket to the client device;
judging whether the ticket is properly generated in accordance with data transmitted from the client device after the step of transmitting transmits the ticket data to the client device; and
re-transmitting the ticket data to the client device if the step of judging judges that the ticket is not properly generated.

13. A computer program product for use on a computer, the computer program product comprising a computer program that causes the computer, when executed, to perform a method for enabling a client device connected to the computer via a network to generate a ticket, the method comprising the steps of:
transmitting ticket data for generating a ticket to the client device;
judging whether the ticket is properly generated in accordance with data transmitted from the client device after the step of transmitting transmits the ticket data to the client device; and
re-transmitting the ticket data to the client device if the step of judging judges that the ticket is not properly generated.

14. A method for inspecting a ticket on a device connected to a server via a network, comprising:
reading information recorded on a ticket;
transmitting data representing the information recorded on the ticket to the server; and
providing notification of an inspection result represented by inspection data when the inspection data is transmitted from the server after the step of transmitting transmits the data to the server.

15. A computer program product for use on a computer, the computer program product comprising a computer program that causes the computer, when executed, to perform a method for inspecting a ticket on the computer connected to a server via a network, comprising:
reading information recorded on a ticket;
transmitting data representing the information recorded on the ticket to the server; and
providing notification of an inspection result represented by inspection data when the inspection data is transmitted from the server after the step of transmitting transmits the data to the server.
